# EUROPÄISCHE PATENTSCHRIFT

(11) **EP 3 910 227 B1**
(45) Veröffentlichungstag und Bekanntmachung des Hinweises auf die Patenterteilung: **05.07.2023**
(21) Anmeldenummer: 20174679.9
(22) Anmeldetag: 14.05.2020
(51) Int. Cl.: F16P 3/14

(54) **ÜBERWACHUNGSEINRICHTUNG UND EIN VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 17.11.2021
(73) Patentinhaber: Leuze electronic GmbH + Co. KG, 73277 Owen/Teck (DE)
(72) Erfinder: Feller, Bernhard, 86316 Friedberg (DE); Jüttner, Andreas, 81543 München (DE)
(74) Vertreter: Ruckh, Rainer Gerhard

(56) Entgegenhaltungen:
- EP-A2- 1 329 662
- DE-A1-102006 008 805

## Beschreibung

Die Erfindung betrifft eine Überwachungseinrichtung gemäß dem Oberbegriff des Anspruchs 1.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben ob ein Objekt im Schutzfeld vorhanden ist oder nicht. Wird mit dem Lichtvorhang ein Objekt im Schutzfeld detektiert wird durch das entsprechende Schaltsignal eine Sicherheitsfunktion ausgelöst. Beispielsweise wird mit dem Schaltsignal einer Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtung der Fördereinrichtung dem Sicherheitssensor Mutingsensoren vorgeordnet. Wird mit den Mutingsensoren ein Objekt als zulässiges Objekt erkannt, wird der Sicherheitssensor für eine vorgegebene Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschrankenanordnungen gebildet. Mit derartigen Lichtschrankenanordnungen können zulässige Objekte oft nicht zuverlässig erkannt werden.

Weiterhin ist bei derartigen Überwachungseinrichtungen nachteilig, dass die dem Sicherheitssensor vorgeordneten Mutingsensoren einen erheblichen Raumbedarf beanspruchen.

Zudem ist nachteilig, dass die Abstimmung des Timings und der Auswertung der Signale der Mutingsensoren aufwändig und fehleranfällig ist, da aus den Zeitpunkten der Objektdetektionen der Mutingsensoren hochgerechnet werden muss, welche Zeitspanne vergeht, bis das zulässige Objekt tatsächlich den Sicherheitssensor passiert hat.

Weiterhin ist es bekannt, ein Muting des Sicherheitssensors abhängig von einem externen Steuersignal zu generieren. Dieses Signal kann beispielsweise von der Steuerung der Fördereinrichtung, welches zulässige Objekte transportiert, generiert werden.

Das Muting des Sicherheitssensors wird bevorzugt mit dem Beginn des externen Steuersignals gestartet. Als Bedingung für das Aufrechterhalten des Mutings kann als Forderung definiert sein, dass innerhalb eines bestimmten Zeitintervalls nach Beginn des Steuersignals der Sicherheitssensor im Schutzfeld einen Objekteingriff registriert.

Die DE 10 2006 008 805 A1 betrifft einen optischen Sensor und ein Verfahren zur Überwachung einer Schutzzone an einem Arbeitsmittel mittels eines optischen Sensors mit einer Kamera und einer Auswerteeinheit. Bei Erfassen eines sicherheitskritischen Objekts in der Schutzzone wird eine Objektmeldung generiert, mittels derer das Arbeitsmittel außer Betrieb gesetzt wird. Bei Erfassen eines nicht sicherheitskritischen Objekts innerhalb der Schutzzone wird wenigstens ein Bereich dieser Schutzzone überbrückt, so dass ein Eindringen eines sicherheitskritischen Objekts in diesen Bereich nicht zur Generierung einer Objektmeldung führt.

Die EP 1 329 662 A2 betrifft einen Sicherheitssensor in Form eines Lichtvorhangs, der eine Mutingfunktion aufweist. Zur Generierung der Mutingfunktion sind dem Lichtvorhang in Transportrichtung von Gütern Mutingsensoren in Form von Lichtschranken vorgeordnet. Abhängig von den Signalen der Mutingsensoren wird eine Mutingfunktion generiert, die für eine vorgegebene Zeit aufrechterhalten wird.

Der Erfindung liegt die Aufgabe zugrunde eine Überwachungseinrichtung der eingangs genannten Art bereitzustellen, welche bei konstruktiv einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, der zur Überwachung eines Schutzfeldes derart ausgebildet ist, dass dieser abhängig von Objektdetektionen im Schutzfeld ein Schaltsignal generiert.

Bei vorhandenem Objekteingriff wird als Schaltsignal ein Signal einer Schutzfeldverletzung generiert. Eine externe Einheit außerhalb des Sicherheitssensors generiert ein Steuersignal mit einem inaktiven und aktiven Signalzustand. In einer Verzögerungseinheit ist das Schaltsignal um einen vorbestimmten Zeitbetrag verzögerbar. Mittels Überwachungsmittel wird als Muting-Bedingung überwacht ob die Signalanfänge und/oder Signalenden des Signals der Schutzfeldverletzung und des aktiven Steuersignals innerhalb eines vorgegebenen Zeitfensters liegen.

Die Erfindung betrifft weiterhin ein entsprechendes Verfahren.

Die erfindungsgemäße Überwachungseinrichtung wird generell für eine Gefahrenbereichsüberwachung an einer gefahrbringenden Anlage eingesetzt. Besonders vorteilhaft wird die Überwachungseinrichtung als Zugangssicherung zu einem Gefahrenbereich eingesetzt, wobei der Zugang zum Gefahrenbereich insbesondere über eine Fördereinrichtung erfolgt.

Als zentrale Sicherheitskomponente der Überwachungseinrichtung ist ein Sicherheitssensor vorgesehen, mit dem ein Schutzfeld überwacht wird, das vorteilhaft in einer Ebene verläuft.

Der Sicherheitssensor generiert ein binäres Schaltsignal, dessen Schaltzustände angeben, ob sich ein Objekt im Schutzfeld befindet oder nicht. Wird mit dem Sicherheitssensor ein Objekteingriff im Schutzfeld registriert, wird durch das Schaltsignal eine Sicherheitsfunktion ausgelöst, beispielsweise die Anlage stillgesetzt, sodass von dieser keine Gefahren mehr ausgehen können.

Um ein unnötiges Stillsetzen der Anlage zu vermeiden wenn zulässige Objekte, wie zum Beispiel der Anlage zuzuführende Transportgüter, durch das Schutzfeld in den Gefahrenbereich der Anlage gefördert sollen, ist eine Mutingfunktion vorgesehen. Bei aktivierter Mutingfunktion wird der Sicherheitssensor vollständig oder partiell überbrückt, das heißt gemutet, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur ein Teil des Schutzfeldes überbrückt, insbesondere der Teil, in dem das zulässige Objekt erwartet beziehungsweise detektiert wird.

Ein wesentlicher Vorteil der erfindungsgemäßen Überwachungseinrichtung besteht darin, dass zur Bereitstellung der Mutingfunktion keine separaten Mutingsensoren benötigt werden. Vielmehr wird die Mutingfunktion allein in Abhängigkeit von Steuersignalen einer externen Einheit und Signalen des Sicherheitssensors selbst bereitgestellt. Die die Steuersignale generierende externe Einheit kann die Steuerung der zu überwachenden Anlage oder die Steuerung der Fördereinheit, die die zulässigen Objekte wie Transportgüter der Anlage zuführt, sein. In beiden Fällen sind die Zeitpunkte, wann Transportgüter der Anlage zugeführt werden sollen bekannt, sodass dementsprechend Steuersignale für die Mutingfunktion generiert werden können.

Das Funktionsprinzip zur Bereitstellung der Mutingfunktion bei der erfindungsgemäßen Überwachungseinrichtung ist derart, die Signalanfänge beziehungsweise Signalenden der Signale einer Schutzfeldverletzung des Sicherheitssensors und des aktiven Steuersignals, das heißt des Steuersignals, das sich im aktiven Signalzustand befindet, daraufhin zu überwachen, ob sich diese innerhalb eines vorgegebenen Zeitfensters befinden. Nur wenn dies der Fall ist, ist eine Muting-Bedingung, nämlich eine Bedingung für den Start oder das Beenden eines Mutings des Sicherheitssensors erfüllt.

Erfindungsgemäß wird dabei das vom Sicherheitssensor generierte Signal einer Schutzfeldverletzung nicht direkt sondern über die Verzögerungseinheit dem Überwachungsmittel der Zeitfenster-Überwachung zugeführt. In der Verzögerungseinheit kann das Signal der Schutzfeldverletzung des Sicherheitssensors verzögert werden, um insbesondere eine zeitliche Abstimmung auf das aktive Steuersignal vorzunehmen. Dies ist insbesondere deshalb vorteilhaft, da mit dem aktiven Steuersignal eine notwendige Bedingung für das Muting des Sicherheitssensors vorgebbar ist. Daher ist es zweckmäßig zuerst diese Muting-Bedingung zu prüfen, um dann abhängig hiervon das verzögerte Signal der Schutzfeldverletzung als Bedingung für ein Muting zu prüfen und bei einem Ausbleiben des Mutings das Signal der Schutzfeldverletzung am Sicherheitssensor auszugeben und damit die Sicherheitsfunktion auszulösen.

Ein wesentlicher Vorteil der Erfindung besteht darin, dass die Zeitfenster für die Definition der Muting-Bedingungen applikationsspezifisch anpassbar sind. Insbesondere können die Zeitfenster kleinstmöglich gewählt werden, insbesondere um dadurch eine erhöhte Manipulationseinheit der Überwachungseinrichtung zu erhalten. Je kleiner die Zeitfenster, desto schwieriger können diese für Manipulationen ausgenutzt werden.

Gemäß einer vorteilhaften Ausführungsform wird das oder jedes Zeitfenster in einem Einlernvorgang bestimmt.

Die Größen der Zeitfenster können damit direkt vor Ort an der Überwachungseinrichtung unter realen Einsatzbedingungen bestimmt werden, wodurch eine optimale Anpassung an die zu überwachenden Prozesse gegeben ist.

Besonders vorteilhaft wird das oder jedes Zeitfenster abhängig von Prozess- und Toleranzvorgaben bestimmt.

Dadurch wird eine besonders exakte Anpassung der Zeitfenster an die tatsächlichen Einsatzbedingungen der Überwachungseinrichtung möglich.

Insbesondere ist durch eine zeitabhängige Erfassung von Prozess- und Toleranzvorgaben eine ständige Prozesskontrolle möglich. Mögliche kritische oder fehlerhafte Zustände können einem Benutzer in Form von Warnsignalen angezeigt werden.

Insbesondere ist es möglich, dass abhängig von zeitabhängigen Toleranzvorgaben die Größe des oder jedes Zeitfensters nachgeführt wird.

Gemäß einer vorteilhaften Ausführungsform der Erfindung ist bei innerhalb eines ersten Zeitfensters liegenden Signalanfängen des Signals der Schutzfeldverletzung und des aktiven Steuersignals eine Bedingung für einen Start eines Mutings des Sicherheitssensors erfüllt.

Insbesondere der Start des Mutings ist durch den Signalanfang des verzögerten Signals der Schutzfeldverletzung definiert.

Das Muting wird daher vorteilhaft nicht unmittelbar dann eingeleitet, wenn ein aktives Steuersignal ansteht. Vielmehr wird der Mutingstart auch davon abhängig gemacht, ob ein mit dem aktiven Steuersignal zeitlich korreliertes Signal einer Schutzfeldverletzung des Sicherheitssensors vorliegt, wodurch diese zeitliche Korrelation durch das erste Zeitfenster definiert ist. Dadurch wird eine erhöhte Fehler- und Manipulationssicherheit für das Muting erzielt.

In entsprechender Weise ist bei innerhalb eines zweiten Zeitfensters liegenden Signalenden der Signale der Schutzfeldverletzung und des aktiven Steuersignals eine Bedingung für ein Ende eines Mutings des Sicherheitssensors erfüllt.

Besonders vorteilhaft ist das Ende des Mutings durch das Signalende des aktiven Steuersignals bestimmt.

Alternativ ist das Ende des Mutings durch das Signalende des Signals der Schutzfeldverletzung bestimmt.

Mit beiden Varianten wird das Muting regulär beendet. Die Zeitdauer des Mutings ist angepasst an die Dauer des aktiven Steuersignals und des Auftretens des Signals der Schutzfeldverletzung, die mit der Zeitdauer, die ein zulässiges Objekt benötigt um das Schutzfeld des Sicherheitssensors zu passieren korrelieren beziehungsweise auf diese abgestimmt sind.

Zusätzlich ist es möglich, dass das Muting durch ein Time-Out-Signal beendbar ist, wobei dieses Beenden des Mutings einem Fehlerzustand entspricht.

Das Mutingende mittels des Time-Out-Signals stellt ein irreguläres Beenden des Mutings im Fehlerfall dar. Dieser Fall tritt beispielsweise dann ein, wenn ein Transportgut im Bereich des Schutzfeldes stehen bleibt und den Sicherheitssensor passiert. Um unsichere Zustände zu vermeiden, wird durch das Muting-Time-Out-Signal das Muting irregulär beendet, was zur Auslösung einer Sicherheitsfunktion führt. Insbesondere kann der Sicherheitssensor nach Mutingende selbst die Sicherheitsfunktion auslösen. Alternativ kann für die zu überwachende Anlage eine Fehlermeldung generiert werden.

Vorteilhaft wird das Time-Out-Signal mittels einer Zeitzähleinheit generiert. Die Zeitzählung der Zeitzähleinheit kann durch ein externes Beeinflussungssignal angehalten werden.

Dabei kann das Beeinflussungssignal von einem Benutzer der Anlage eingegeben werden, um ein irreguläres Beenden des Mutings zu verhindern.

Gemäß einer vorteilhaften Ausführungsform ist der Sicherheitssensor ein optischer Sensor.

Insbesondere ist der Sicherheitssensor ein Lichtvorhang oder ein Flächendistanzsensor.

Generell weist der Lichtvorhang eine Reihenanordnung von Lichtstrahlen emittierenden Sendern und eine Reihenanordnung von korrespondierenden Empfängern auf, wobei die Lichtstrahlen Strahlachsen des Lichtvorhangs ausbilden.

Der Begriff Lichtvorhang umfasst dabei auch Reflexions-Lichtvorhänge, Lichtgitter und auch diskrete Anordnungen von Lichtschranken oder Reflexionslichtschranken. Flächendistanzsensoren sind generell scannende Distanzsensoren, bei welchen bevorzugt Distanzmessungen nach einem Impuls-Laufzeitverfahren oder Phasenmessverfahren erfolgen. Eine Überwachung eines flächigen Schutzfeldes wird dadurch erreicht, dass vom Sender des Distanzsensors emittierte Sendelichtstrahlen über eine um eine Drehachse drehbare Ablenkeinheit abgelenkt werden. Alternativ kann der Distanzsensor in einem rotierenden Messkopf integriert sein.

Mit der Mutingfunktion kann der erfindungsgemäße Sicherheitssensor vollständig gemutet werden. Alternativ ist auch ein partielles Muting möglich, bei dem nur Teilbereiche des Schutzfeldes gemutet werden, und zwar insbesondere diejenigen, in welchen das jeweilige zulässige Objekt das Schutzfeld passiert, um so ein unnötiges Auslösen der Sicherheitsfunktion des Sicherheitssensors zu vermeiden.

Bei einem Sicherheitssensor in Form eines Lichtvorhangs wird ein partielles Muting dadurch realisiert, dass nur ein Teil der Strahlachsen des Lichtvorhangs gemutet wird.

In einem spezifischen Fall eines Mutings in Form eines Gatings kann dann für ein gültiges Muting gefordert werden, dass die gemuteten Strahlachsen auch durch das zulässige Objekt, welches das Schutzfeld passieren soll, unterbrochen sein müssen.

Für die nicht gemuteten Strahlachsen sind dann folgende Vorgaben sinnvoll.

Während des Mutings müssen nicht gemutete Strahlachsen frei bleiben, wobei vorteilhaft für Strahlachsen in den Randbereichen zwischen gemuteten und nicht gemuteten Strahlachsen aufgrund der durch Toleranzen unbestimmten Strahlzustände zweckmäßig keine Vorgaben gemacht werden, das heißt diese dürfen unbestimmt sein.

Die Erfindung wird im Folgenden anhand der Zeichnungen erläutert. Es zeigen:
- Figur 1:: Beispiel einer erfindungsgemäßen Überwachungseinrichtung als Zugangssicherung zu einem Gefahrenbereich einer Anlage.
- Figur 2:: Einzeldarstellung des Sicherheitssensors der Überwachungseinrichtung gemäß Figur 1.
- Figur 3:: Erstes Beispiel der Schaltungskomponenten der Überwachungseinrichtung gemäß Figur 1.
- Figur 4:: Zweites Beispiel der Schaltungskomponenten der Überwachungseinrichtung gemäß Figur 1.
- Figur 5:: Blockschaltbild der Logik zur Generierung von Mutingfunktionen für die Schaltungsanordnungen der Figuren 3 und 4.
- Figur 6:: Erste Zeitdiagramme für die Generierung von Mutingfunktionen.
- Figur 7:: Zweite Zeitdiagramme für die Generierung von Mutingfunktionen.
- Figur 8:: Schematische Darstellung des Sicherheitssensors gemäß Figur 2 mit partiellem Muting.

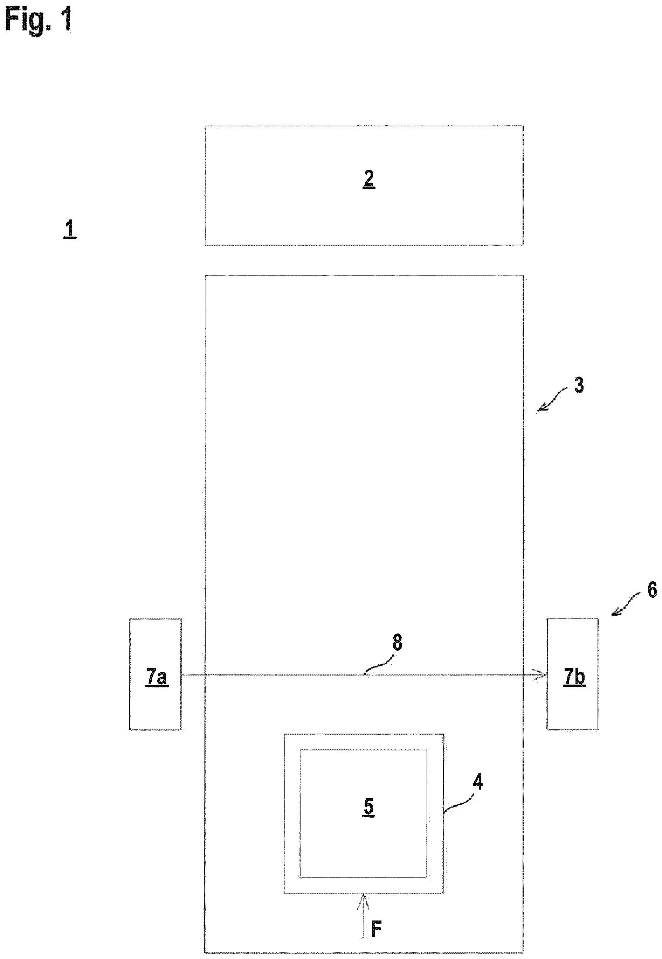

Figur 1 zeigt schematisch ein Beispiel der erfindungsgemäßen Überwachungseinrichtung 1. Die Überwachungseinrichtung 1 wird im vorliegenden Fall als Zugangssicherung für einen Gefahrenbereich an einer gefahrbringenden Anlage 2 eingesetzt. Der Zugang zum Gefahrenbereich erfolgt über eine Fördereinrichtung 3, deren Förderband in der mit F gekennzeichneten Bewegungsrichtung bewegt wird, um auf Paletten 4 angeordnete Transportgüter 5 in den Gefahrenbereich zu fördern. Natürlich können auf dieselbe Weise Transportgüter 5 aus dem Gefahrenbereich herausgeführt werden. Die Fördereinrichtung 3 kann durch seitlich angebrachte Umzäunungen geschützt werden.

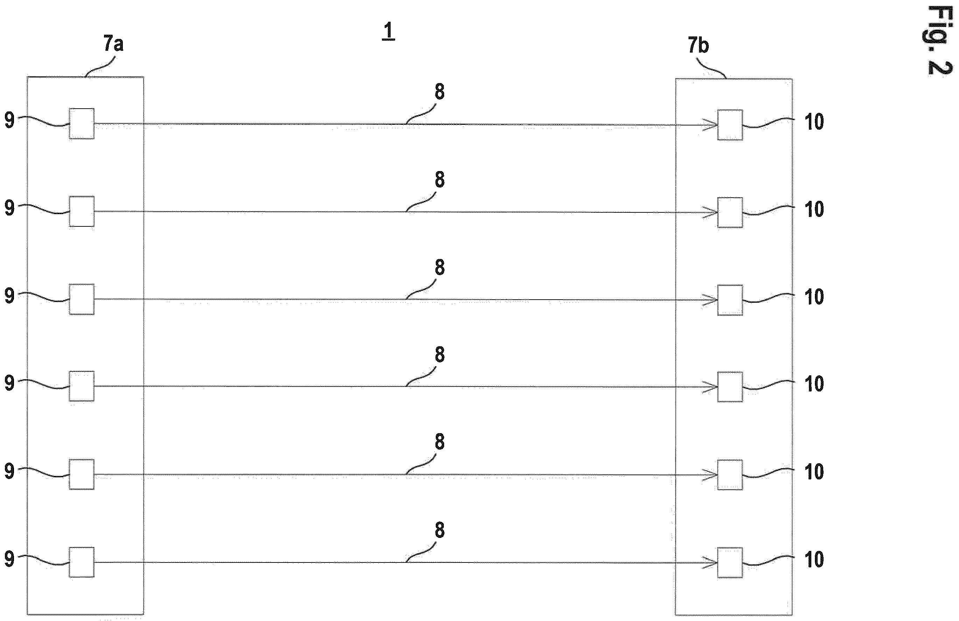

Die Überwachungseinrichtung 1 umfasst einen Sicherheitssensor 6 in Form eines optischen Sensors. Dieser kann beispielsweise als Flächendistanzsensor ausgebildet sein. Im vorliegenden Fall ist der Sicherheitssensor 6 als Lichtvorhang ausgebildet (Figur 2).

Der Lichtvorhang weist in einem ersten Gehäuse 7a eine Reihenanordnung von Lichtstrahlen 8 emittierenden Sendern 9 und in einem zweiten Gehäuse 7b eine Reihenanordnung von Empfängern 10 auf. Die Lichtstrahlen 8 definieren Strahlachsen des Lichtvorhangs und spannen ein flächiges Schutzfeld auf, das in einer vertikalen Ebene orientiert ist und damit senkrecht zur horizontalen Oberfläche des Förderbands der Fördereinrichtung 3 verläuft.

Die Sender 9 werden einzeln nacheinander zyklisch mittels einer nicht dargestellten Sendersteuerung aktiviert. Die Empfänger 10 werden in bekannter Weise optisch auf die Sender 9 synchronisiert.

Die in den Empfängern 10 generierten Empfangssignale werden in einer nicht dargestellten Auswerteeinheit zur Generierung eines binären Schaltsignals ausgewertet. Die Schaltzustände des Schaltsignals geben an, ob sich ein Objekt im Schutzfeld befindet oder nicht. Bei freiem Schutzfeld treffen die Lichtstrahlen 8 aller Sender 9 ungehindert auf den zugeordneten Empfänger 10. Bei einem Obj ekteingriff im Schutzfeld werden durch das Objekt die Lichtstrahlen 8 wenigstens eines Senders 9 unterbrochen. Zur Erfüllung der sicherheitstechnischen Anforderungen weist die Auswerteeinheit einen redundanten, vorzugsweise zweikanaligen Aufbau auf.

Wird mit dem Sicherheitssensor 6 ein Objekteingriff im Schutzfeld registriert, wird durch das Schaltsignal eine Sicherheitsfunktion ausgelöst, insbesondere die gefahrbringende Anlage 2 stillgesetzt.

Um ein unnötiges Stillsetzen der Anlage 2 zu vermeiden kann der Sicherheitssensor 6 in Abhängigkeit von Mutingsignalen von Mutingsensoren überbrückt werden, wenn ein zulässiges Objekt wie zum Beispiel ein auf einer Palette 4 gelagertes Transportgut 5 das Schutzfeld des Sicherheitssensors 6 passiert. Durch die Überbrückung des Sicherheitssensors 6 löst dieser keine Sicherheitsfunktion aus, wenn das zulässige Objekt das Schutzfeld passiert und das Transportgut 5 kann der Anlage 2 zugeführt werden, ohne dass diese stillgesetzt wird.

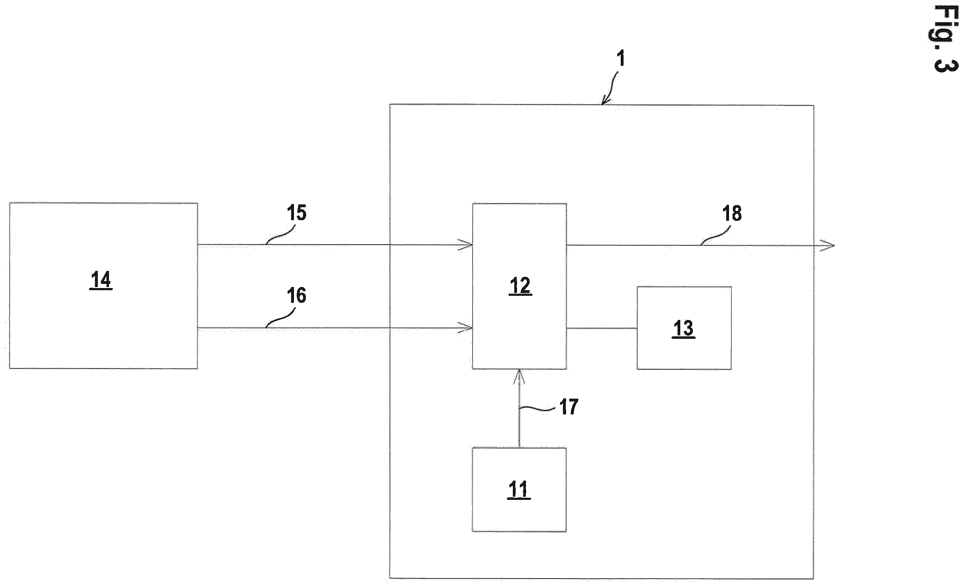

Figur 3 zeigt ein erstes Beispiel des Schaltungsaufbaus der Überwachungseinrichtung 1 gemäß Figur 1.

Die Überwachungseinrichtung 1 umfasst eine im Sicherheitssensor 6 durchgeführte Schutzfeldüberwachung 11. Weiterhin ist eine Steuereinheit 12 vorgesehen, die die erfindungsgemäßen Überwachungsmittel bildet und in der die Mutingfunktionen für den Sicherheitssensor 6 generiert und überwacht werden. Im vorliegenden Fall ist die Steuereinheit 12 als interne, im Sicherheitssensor 6 integrierte Einheit ausgebildet. Der Steuereinheit 12 ist eine externe Speichereinheit 13 zugeordnet.

Weiterhin ist eine externe Prozesssteuerung 14 vorgesehen. Diese kann beispielsweise von einer Steuerung gebildet sein, die die so überwachende Anlage 2 oder die Fördereinrichtung 3 steuert.

Die Prozesssteuerung 14 generiert ein Steuersignal, das über eine Leitung 15 der Steuereinheit 12 zugeführt wird. Weiterhin wird über eine Leitung 16 von der Prozesssteuerung 14 der Steuereinheit 12 ein Time-Out-Unterbrechungssignal zugeführt.

Der Begriff Leitung umfasst dabei, wie auch in den folgenden Figuren, Datenverbindungen aller Art, insbesondere auch berührungslos arbeitende Schnittstellen.

Die Schutzfeldüberwachung 11 generiert das binäre Schaltsignal, das angibt ob ein Objekt im Schutzfeld vorhanden ist und damit ein Signal einer Schutzfeldverletzung, wenn ein Objekteingriff im Schutzfeld registriert wird. Das Signal der Schutzfeldverletzung wird über eine Leitung 17 der Steuereinheit 12 zugeführt.

Die Steuereinheit 12 gibt über eine weitere Leitung 18 ein Ausgangssignal aus, welches definiert ob eine Anlagenabschaltung durch den Sicherheitssensor 6 erfolgt oder nicht. Die Anlagenabschaltung ist erforderlich bei Schutzfeldunterbrechung und wenn zugleich keine Muting-Bedingung festgestellt ist.

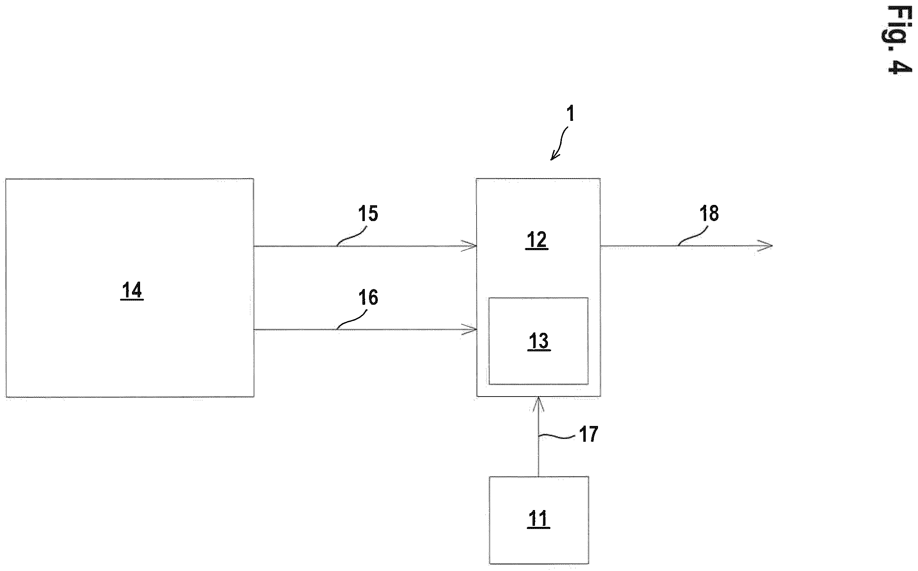

Die Schaltungsanordnung gemäß Figur 4 entspricht hinsichtlich Funktion und Aufbau weitgehend der Ausführungsform gemäß Figur 3.

Im Unterschied zur Ausführungsform gemäß Figur 3 ist im vorliegenden Fall die Steuereinheit 12 als externe, außerhalb des Sicherheitssensors 6 angeordnete Einheit ausgebildet. Die Speichereinheit 13 ist in der Steuereinheit 12 integriert.

Die Speichereinheit 13 gemäß Figur 3 beziehungsweise Figur 4 dient allgemein zur Speicherung von insbesondere eingelernten Zeiten beziehungsweise Zeitintervallen, die zur Steuerung der Mutingfunktion benötigt werden.

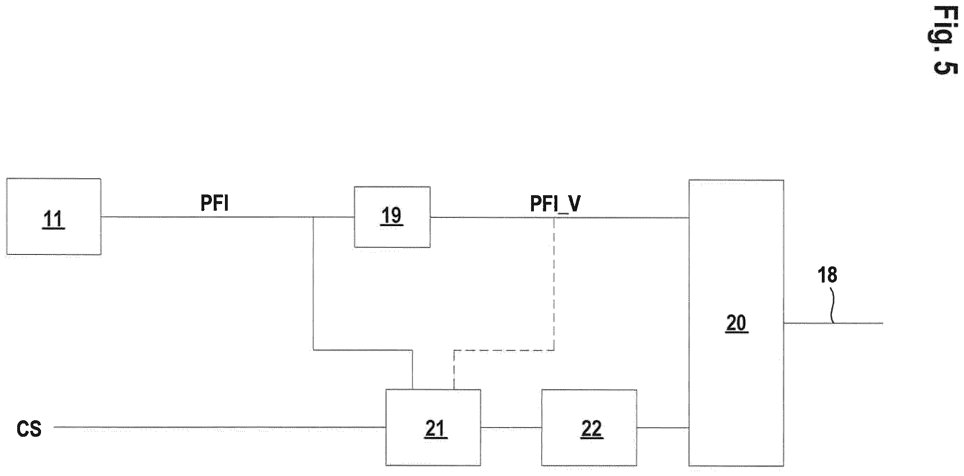

Der Aufbau der Steuereinheit 12 der Anordnungen gemäß den Figuren 3 und 4 ist in Figur 5 detaillierter dargestellt.

Das in der Schutzfeldüberwachung 11 generierte Signal einer Schutzfeldverletzung (in Figur 5 mit PFI bezeichnet) wird einer Verzögerungseinheit 19 zugeführt, wo das Signal PFI um eine umstellbare Zeit verzögert werden kann. Das verzögerte Signal der Schutzfeldverletzung (bezeichnet mit PFI_V) wird einer Überwachungslogik 20 zugeführt.

Das Steuersignal der Prozesssteuerung 14 (in Figur 5 mit CS bezeichnet) wird einer Überbrückungseinheit 21 zugeführt. Auch das verzögerte Signal der Schutzfeldverletzung (PFI_V) wird der Überbrückungseinheit 21 zugeführt. Die Ausgangssignale dieser Überbrückungseinheit 21 werden über einen Invertierer 22 der Überwachungslogik 20 zugeführt. Die Überwachungslogik gibt als Ausgangssignal aus ob ein Muting erfolgt oder nicht.

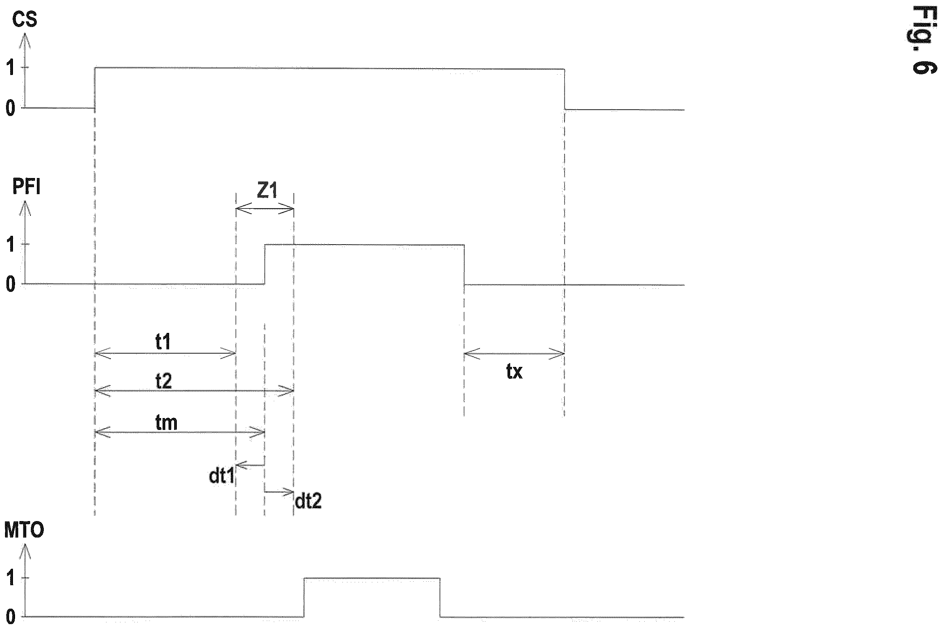

Figur 6 zeigt Zeitdiagramme für ein erstes Beispiel der Generierung einer Mutingfunktion mit der Überwachungseinrichtung 1 der Figuren 3 bis 5.

Das erste Diagramm in Figur 6 zeigt den zeitlichen Verlauf des Steuersignals, das zwei Schaltzustände, inaktiv (0) und aktiv (1), aufweist.

Das zweite Zeitdiagramm zeigt den zeitlichen Verlauf des im Sicherheitssensor 6 ausgegebenen Schaltsignals, das ebenfalls zwei binäre Schaltzustände 0 und 1 aufweist, wobei der Schaltzustand 1 einem Signal einer Schutzfeldverletzung entspricht.

Anhand von eingelernten und in der Speichereinheit 13 abgespeicherten Zeitwerten wird die Mutingfunktion für den Sicherheitssensor 6 der Überwachungseinrichtung 1 gesteuert.

Im vorliegenden Fall liegt der Zeitpunkt des Signalbeginns der Schutzfeldverletzung (bei welchem das Schaltsignal von 0 auf 1 wechselt) nach dem Zeitpunkt des Signalbeginns des aktiven Steuersignals (bei welchem das Steuersignal von 0 auf 1 wechselt).

Daher wird das Signal der Schutzfeldverletzung (PFI) in der Verzögerungseinheit 19 nicht verzögert.

Als Mutingbedingung wird in der Steuereinheit 12 überprüft, ob der Signalbeginn des aktiven Steuersignals innerhalb eines vorgegebenen Zeitfensters Z1 nach dem Beginn des Signals der Schutzfeldverletzung liegt.

Die Grenzen des Zeitfensters Z1 sind durch die Zeiten t1 und t2 definiert, die in der Speichereinheit 13 abgespeichert sind.

Der Signalbeginn des aktiven Steuersignals liegt, wie aus Figur 6 ersichtlich, um die Zeit tm zum Signalbeginn des Signals der Schutzfeldverletzung versetzt und damit innerhalb des Zeitfensters Z1 (um dt1 versetzt zur unteren Grenze und dt2 versetzt zur oberen Grenze des Zeitfensters Z1).

Damit ist die Muting-Bedingung erfüllt und das Muting des Sicherheitssensors 6 wird mit Beginn des aktiven Steuersignals gestartet.

Eine entsprechende Zeitfenster-Überwachung kann auch für die Signalenden des aktiven Steuersignals und des Signals der Schutzfeldverletzung erfolgen, welche, wie Figur 6 zeigt, um die Zeit tx versetzt sind. Bei dieser Zeitfenster-Überwachung kann das Mutingende beispielsweise durch das Signalende des aktiven Steuersignals oder das Ende des Signals der Schutzfeldverletzung definiert sein.

Im vorliegenden Fall wird das Muting durch ein Muting-Time-Out-Signal (MTO) beendet. Das Muting-Time-Out-Signal wird in einer Zeitzähleinheit generiert, die in der Steuereinheit 12 integriert ist.

Die Zeitzählung zur Generierung des Muting-Time-Out-Signals kann durch das von der Prozesssteuerung 14 über die Leitung 16 eingelesene Muting-Time-Out-Unterbrechungssignal unterbrochen werden.

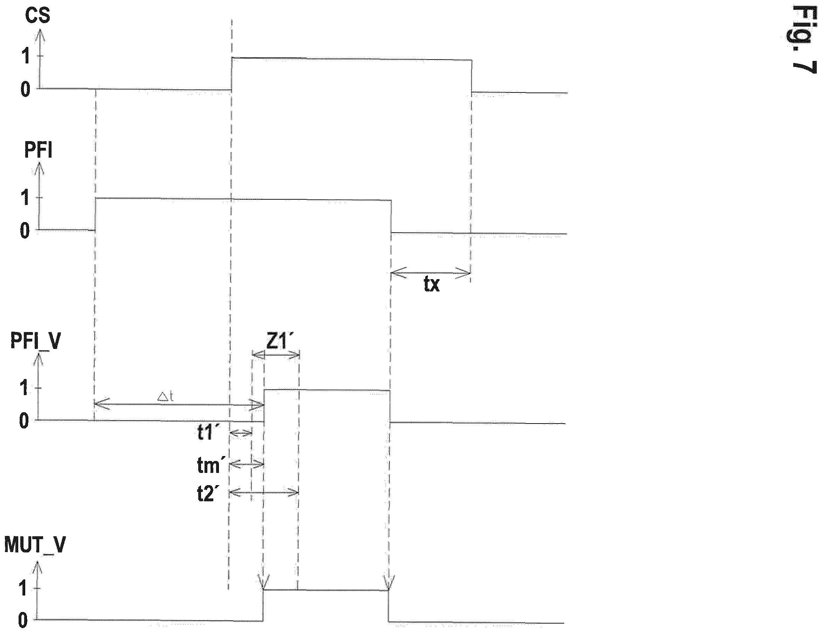

Figur 7 zeigt Zeitdiagramme für ein zweites Beispiel der Generierung einer Mutingfunktion mit der Überwachungseinrichtung 1 der Figuren 3 bis 5.

Das erste Diagramm zeigt wieder das Steuersignal CS, das zweite Diagramm das Schaltsignal des Sicherheitssensors 6.

Im vorliegenden Fall liegt der Signalbeginn des aktiven Steuersignals zeitlich nach dem Beginn des Signals der Schutzfeldverletzung.

Daher wird in der Verzögerungseinheit 19 der Signalbeginn des Signals der Schutzfeldverletzung (nicht jedoch dessen Signal ende) um einen Betrag Δt verzögert, wodurch das verzögerte Signal der Schutzfeldverletzung (PFI_V) erhalten wird.

Für das verzögerte Signal PFI_V wird entsprechend der Ausführungsform gemäß Figur 6 geprüft, ob der Versatz des Signalbeginns des Signals PFI_V relativ zum Signalbeginn des aktiven Steuersignals innerhalb eines Zeitfensters Z 1' liegt, wobei in diesem Fall das Zeitfenster Z 1' durch vom Signalbeginn des aktiven Steuersignals ausgehende Zeiten t1' und t2' definiert ist.

Da diese Bedingung im vorliegenden Fall erfüllt ist, ist die Bedingung für den Muting-Start erfüllt, wobei dieser um die Zeit tm' zum Signalbeginn des aktiven Steuersignals versetzt ist und innerhalb des Zeitfensters Z 1' liegt.

Das Mutingsignal MUT_V zeigt die Zeitdauer des Mutings. Das Muting wird im vorliegenden Fall durch das Signalende des Signals der Schutzfeldverletzung beendet. Alternativ kann das Muting mit dem Signalende des aktiven Steuersignals beendet werden oder einen definierten Zeitbezug zu diesen Signalenden oder Signalen.

Das Muting kann derart ausgebildet sein, dass sämtliche Strahlachsen des den Sicherheitssensor 6 bildenden Lichtvorhangs gemutet, das heißt überbrückt wird, sodass der gesamte Lichtvorhang stummgeschaltet ist, dass keine Sicherheitsfunktion ausgelöst wird, wenn auch irgendeine der Strahlachsen durch ein Objekt unterbrochen ist.

Generell ist auch ein partielles Muting möglich, bei dem nur einige Strahlachsen des Lichtvorhangs gemutet werden. Die anderen Strahlachsen sind nicht gemutet, sodass dort registrierte Objekteingriffe während der Mutingphase zur Auslösung der Sicherheitsfunktion führen.

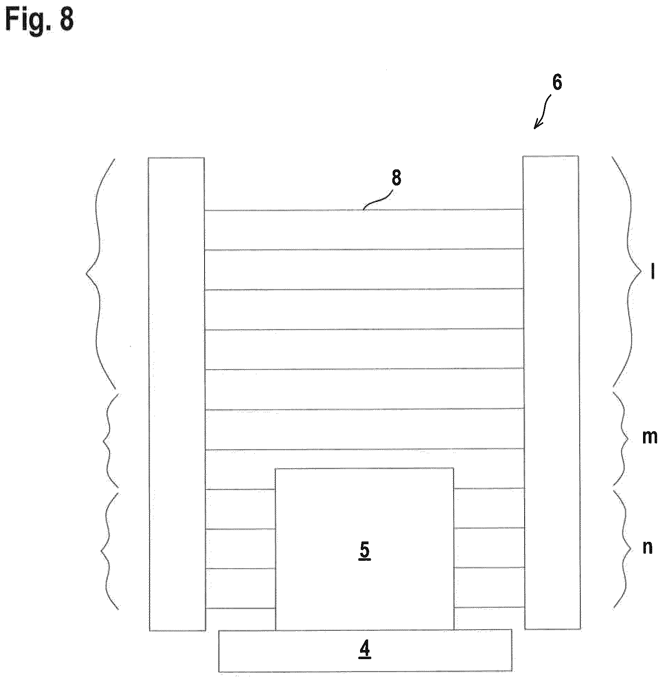

Figur 8 zeigt eine spezielle Variante eines partiellen Mutings in Form eines partiellen Gatings.

In den untersten n Strahlachsen des Lichtvorhangs passiert das Transportgut 5 als zulässiges Objekt, sodass diese gemutet sind. Im vorliegenden Fall ist ein Gating derart durchgeführt, dass für alle gemuteten n Strahlachsen gefordert wird, dass diese durch ein Objekt, das heißt das Transportgut 5, unterbrochen sind.

An den gemuteten Bereich der unteren n Strahlachsen schließen m Strahlachsen an, die einen Übergangsbereich zwischen den unteren n Strahlachsen und einem oberen Bereich mit l Strahlachsen bilden. Für die nicht gemuteten oberen l Strahlachsen wird gefordert, dass diese frei bleiben müssen, das heißt die Unterbrechung von einer der oberen l Strahlachsen führt zur Auslösung der Sicherheitsfunktion durch den Lichtvorhang.

Die m Strahlachsen des Übergangsbereichs dürfen unbestimmt sein, das heißt egal ob dort ein Objekteingriff registriert wird oder nicht, es wird keine Sicherheitsfunktion ausgelöst.

### Bezugszeichenliste

- (1): Überwachungseinrichtung
- (2): Anlage
- (3): Fördereinrichtung
- (4): Palette
- (5): Transportgut
- (6): Sicherheitssensor
- (7a): erstes Gehäuse
- (7b): zweites Gehäuse
- (8): Lichtstrahl
- (9): Sender
- (10): Empfänger
- (11): Schutzfeldüberwachung
- (12): Steuereinheit
- (13): Speichereinheit
- (14): Prozesssteuerung
- (15): Leitung
- (16): Leitung
- (17): Leitung
- (18): Leitung
- (19): Verzögerungseinheit
- (20): Überwachungslogik
- (21): Überbrückungseinheit
- (22): Invertierer
- F: Bewegungsrichtung
- t1, t1': Zeit
- t2, t2': Zeit
- tm, tm': Zeit
- tx: Zeit
- dt1, dt2: Zeitintervall
- Z1, Z1': Zeitfenster
- CS: Steuersignal
- PFI: Signal Schutzfeldverletzung
- PFI_V: verzögertes Signal Schutzfeldverletzung
- MTO: Muting-Time-Out-Signal
- MUT_V: Mutingsignal
- n, m, l: Strahlachsen

## Patentansprüche

1. Überwachungseinrichtung (1) mit einem Sicherheitssensor (6), der zur Überwachung eines Schutzfeldes derart ausgebildet ist, dass dieser abhängig von Objektdetektionen im Schutzfeld ein Schaltsignal generiert, wobei bei vorhandenem Objekteingriff als Schaltsignal ein Signal einer Schutzfeldverletzung generiert wird, **dadurch gekennzeichnet, dass** eine externe Einheit außerhalb des Sicherheitssensors (6) vorgesehen ist, die ein Steuersignal mit einem inaktiven und aktiven Signalzustand generiert, dass eine Verzögerungseinheit (19) vorgesehen ist, in welcher das Schaltsignal um einen vorbestimmten Zeitbetrag verzögerbar ist, und dass Überwachungsmittel vorgesehen sind, mittels derer als Muting-Bedingung überwacht wird ob die Signalanfänge und/oder Signalenden des Signals der Schutzfeldverletzung und des aktiven Steuersignals innerhalb eines vorgegebenen Zeitfensters (Z1) liegen.

2. Überwachungseinrichtung (1) nach Anspruch 1, **dadurch gekennzeichnet, dass** das oder jedes Zeitfenster (Z1) in einem Einlernvorgang bestimmt wird.

3. Überwachungseinrichtung (1) nach einem der Ansprüche 1 oder 2, **dadurch gekennzeichnet, dass** das oder jedes Zeitfenster (Z 1, Z 1') abhängig von Prozess- und Toleranzvorgaben bestimmt wird.

4. Überwachungseinrichtung (1) nach Anspruch 3, **dadurch gekennzeichnet, dass** abhängig von zeitabhängigen Toleranzvorgaben die Größe des oder jedes Zeitfensters (Z1, Z1') nachgeführt wird.

5. Überwachungseinrichtung (1) nach einem der Ansprüche 1 bis 4, **dadurch gekennzeichnet, dass** bei innerhalb eines ersten Zeitfensters (Z1) liegenden Signalanfängen des Signals der Schutzfeldverletzung und des aktiven Steuersignals eine Bedingung für einen Start eines Mutings des Sicherheitssensors (6) erfüllt ist.

6. Überwachungseinrichtung (1) nach Anspruch 5, **dadurch gekennzeichnet, dass** der Start des Mutings durch den Signalanfang des verzögerten Signals der Schutzfeldverletzung definiert ist.

7. Überwachungseinrichtung (1) nach einem der Ansprüche 1 bis 6, **dadurch gekennzeichnet, dass** bei innerhalb eines zweiten Zeitfensters (Z1') liegenden Signalenden der Signale der Schutzfeldverletzung und des aktiven Steuersignals eine Bedingung für ein Ende eines Mutings des Sicherheitssensors (6) erfüllt ist.

8. Überwachungseinrichtung (1) nach Anspruch 7, **dadurch gekennzeichnet, dass** das Ende des Mutings durch das Signalende des aktiven Steuersignals bestimmt ist.

9. Überwachungseinrichtung (1) nach Anspruch 7, **dadurch gekennzeichnet, dass** das Ende des Mutings durch das Signalende des Signals der Schutzfeldverletzung bestimmt ist.

10. Überwachungseinrichtung (1) nach einem der Ansprüche 7 bis 9, **dadurch gekennzeichnet, dass** das Muting durch ein Time-Out-Signal beendbar ist, wobei dieses Beenden des Mutings einem Fehlerzustand entspricht.

11. Überwachungseinrichtung (1) nach Anspruch 10, **dadurch gekennzeichnet, dass** das Time-Out-Signal mittels einer Zeitzähleinheit generiert ist.

12. Überwachungseinrichtung (1) nach Anspruch 11, **dadurch gekennzeichnet, dass** die Zeitzählung der Zeitzähleinheit durch ein externes Beeinflussungssignal angehalten werden kann.

13. Überwachungseinrichtung (1) nach einem der Ansprüche 1 bis 12, **dadurch gekennzeichnet, dass** ein partielles Muting vorgesehen ist.

14. Überwachungseinrichtung (1) nach einem der Ansprüche 1 bis 13, **dadurch gekennzeichnet, dass** der Sicherheitssensor (6) ein Lichtvorhang oder ein Flächendistanzsensor ist.

15. Überwachungseinrichtung (1) nach Anspruch 14, **dadurch gekennzeichnet, dass** der Lichtvorhang eine Reihenanordnung von Lichtstrahlen (8) emittierenden Sendern (9) und eine Reihenanordnung von korrespondierenden Empfängern (10) aufweist, wobei die Lichtstrahlen (8) Strahlachsen des Lichtvorhangs ausbilden.

16. Überwachungseinrichtung (1) nach Anspruch 15, **dadurch gekennzeichnet, dass** bei einem partiellen Muting nur ein Teil der Strahlachsen eines Lichtvorhangs überbrückt ist.

17. Überwachungseinrichtung (1) nach einem der Ansprüche 14 oder 16, **dadurch gekennzeichnet, dass** während des Mutings des Lichtvorhangs vorbestimmte Strahlachsen freibleiben müssen.

18. Überwachungseinrichtung (1) nach einem der Ansprüche 14 bis 17, **dadurch gekennzeichnet, dass** während des Mutings des Lichtvorhangs vorbestimmte Strahlachsen unbestimmt sein dürfen.

19. Überwachungseinrichtung (1) nach Anspruch 17, **dadurch gekennzeichnet, dass** unbestimmte Strahlachsen Übergangsbereiche zwischen gemuteten Strahlachsen und Strahlachsen die freibleiben müssen bilden.

20. Verfahren zum Betrieb einer Überwachungseinrichtung (1) mit einem Sicherheitssensor (6), der zur Überwachung eines Schutzfeldes derart ausgebildet ist, dass dieser abhängig von Objektdetektionen im Schutzfeld ein Schaltsignal generiert, wobei bei vorhandenem Objekteingriff als Schaltsignal ein Signal einer Schutzfeldverletzung generiert wird, **dadurch gekennzeichnet, dass** eine externe Einheit außerhalb des Sicherheitssensors (6) vorgesehen ist, die ein Steuersignal mit einem inaktiven und aktiven Signalzustand generiert, dass eine Verzögerungseinheit (19) vorgesehen ist, in welcher das Schaltsignal um einen vorbestimmten Zeitbetrag verzögerbar ist, und dass Überwachungsmittel vorgesehen sind, mittels derer als Muting-Bedingung überwacht wird ob die Signalanfänge und/oder Signalenden des Signals der Schutzfeldverletzung und des aktiven Steuersignals innerhalb eines vorgegebenen Zeitfensters (Z1) liegen.

## Claims

1. A monitoring device (1) having a safety sensor (6) which is designed to monitor a protective field in such a way that it generates a switching signal as a function of object detections in the protective field, a signal of a protective field violation being generated as a switching signal in the event of object interference, **characterised in that** an external unit is provided outside the safety sensor (6), which generates a control signal with an inactive and active signal state, **in that** a delay unit (19) is provided in which the switching signal can be delayed by a predetermined time amount, and **in that** monitoring means are provided by means of which it is monitored as a muting condition whether the signal starts and/or signal ends of the signal of the protective field violation and of the active control signal lie within a predetermined time window (ZI).

2. A monitoring device (1) according to claim 1, **characterised in that** the or each time window (Z1) is determined in a calibration process.

3. A monitoring device (1) according to one of the claims 1 or 2, **characterised in that** the or each time window (Z1, Z 1') is determined depending on process and tolerance specifications.

4. A monitoring device (1) according to claim 3, **characterised in that** the size of the or each time window (Z1, Z 1') is adjusted depending on time-dependent tolerance specifications.

5. A monitoring device (1) according to one of the claims 1 to 4, **characterised in that** a condition for starting a muting of the safety sensor (6) is fulfilled if the signal beginnings of the signal of the protective field violation and of the active control signal lie within a first time window (Z 1).

6. A monitoring device (1) according to claim 5, **characterised in that** the start of the muting is defined by the signal start of the delayed signal of the protective field violation.

7. A monitoring device (1) according to one of the claims 1 to 6, **characterised in that** a condition for an end of a muting of the safety sensor (6) is fulfilled if the signal ends of the signals of the protective field violation and of the active control signal lie within a second time window (Z1').

8. A monitoring device (1) according to claim 7, **characterised in that** the end of the muting is determined by the signal end of the active control signal.

9. A monitoring device (1) according to claim 7, **characterised in that** the end of the muting is determined by the signal end of the signal of the protective field violation.

10. A monitoring device (1) according to one of the claims 7 to 9, **characterised in that** the muting can be terminated by a time-out signal, this termination of the muting corresponding to an error state.

11. A monitoring device (1) according to claim 10, **characterised in that** the time-out signal is generated by means of a time counting unit.

12. A monitoring device (1) according to claim 11, **characterised in that** the time counting of the time counting unit can be stopped by an external influencing signal.

13. A monitoring device (1) according to one of the claims 1 to 12, **characterised in that** partial muting is provided.

14. A monitoring device (1) according to one of claims 1 to 13, **characterised in that** the safety sensor (6) is a light curtain or an area distance sensor.

15. A monitoring device (1) according to claim 14, **characterised in that** the light curtain has a series assembly of transmitters (9) emitting light beams (8) and a series assembly of corresponding receivers (10), the light beams (8) forming beam axes of the light curtain.

16. A monitoring device (1) according to claim 15, **characterised in that** only a part of the beam axes of a light curtain is bridged in the case of partial muting.

17. A monitoring device (1) according to one of claims 14 or 16, **characterised in that** predetermined beam axes must remain free during muting of the light curtain.

18. A monitoring device (1) according to one of the claims 14 to 17, **characterised in that** predetermined beam axes may be undefined during the muting of the light curtain.

19. A monitoring device (1) according to claim 17, **characterised in that** indeterminate beam axes form transition regions between muted beam axes and beam axes which must remain free.

20. A method for operating a monitoring device (1) having a safety sensor (6) which is designed for monitoring a protective field in such a way that it generates a switching signal as a function of object detections in the protective field, a signal of a violation of the protective field being generated as a switching signal in the event of object intervention, **characterised in that** an external unit is provided outside the safety sensor (6), which generates a control signal with an inactive and active signal state, **in that** a delay unit (19) is provided in which the switching signal can be delayed by a predetermined time amount, and **in that** monitoring means are provided by means of which it is monitored as a muting condition whether the signal beginnings and/or signal ends of the signal of the protective field violation and of the active control signal lie within a predetermined time window (Z1).

## Revendications

1. Dispositif de surveillance (1) comportant un capteur de sécurité (6) conçu pour surveiller un champ de protection de manière à générer un signal de commutation en fonction des détections d'objets dans le champ de protection, un signal de violation du champ de protection étant généré comme signal de commutation en cas d'interférence d'objets, **caractérisé par le fait qu'**une unité externe est prévue à l'extérieur du capteur de sécurité (6), qui génère un signal de commande avec un état de signal inactif et actif, en ce qu'une unité de retard (19) est prévue dans laquelle le signal de commutation peut être retardé d'une durée prédéterminée, et en ce que des moyens de surveillance sont prévus au moyen desquels il est surveillé comme condition d'inhibition si les débuts et/ou les fins de signal du signal de violation du champ de protection et du signal de commande actif se trouvent dans une fenêtre de temps prédéterminée (Z1).

2. Dispositif de surveillance (1) selon la revendication 1, **caractérisé par le fait que** la ou chaque fenêtre temporelle (Z1) est déterminée lors d'un processus d'étalonnage.

3. Dispositif de surveillance (1) selon l'une des revendications 1 ou 2, **caractérisé en ce que** la ou chaque fenêtre de temps (Z1, Z1') est déterminée en fonction du processus et des spécifications de tolérance.

4. Dispositif de surveillance (1) selon la revendication 3, **caractérisé en ce que** la taille de la ou de chaque fenêtre temporelle (Z1, Z1') est ajustée en fonction des spécifications de tolérance dépendant du temps.

5. Dispositif de surveillance (1) selon l'une des revendications 1 à 4, **caractérisé par le fait qu'**une condition de démarrage de l'inhibition du capteur de sécurité (6) est remplie si les débuts du signal de violation du champ de protection et du signal de commande actif se situent dans une première fenêtre temporelle (Z1).

6. Dispositif de surveillance (1) selon la revendication 5, **caractérisé par le fait que** le début de l'inhibition est défini par le début du signal retardé de la violation du champ de protection.

7. Dispositif de surveillance (1) selon l'une des revendications 1 à 6, **caractérisé en ce qu'**une condition de fin d'inhibition du capteur de sécurité (6) est remplie si les extrémités des signaux de violation du champ de protection et du signal de commande actif se situent dans une seconde fenêtre temporelle (Z1').

8. Dispositif de surveillance (1) selon la revendication 7, **caractérisé par le fait que** la fin de l'inhibition est déterminée par la fin du signal du signal de contrôle actif.

9. Dispositif de surveillance (1) selon la revendication 7, **caractérisé en ce que** la fin de l'inhibition est déterminée par la fin du signal de la violation du champ de protection.

10. Dispositif de surveillance (1) selon l'une des revendications 7 à 9, **caractérisé en ce que** l'inhibition peut être interrompue par un signal de temporisation, cette interruption de l'inhibition correspondant à un état d'erreur.

11. Dispositif de surveillance (1) selon la revendication 10, **caractérisé en ce que** le signal de temporisation est généré au moyen d'une unité de comptage du temps.

12. Dispositif de surveillance (1) selon la revendication 11, **caractérisé en ce que** le comptage du temps de l'unité de comptage du temps peut être arrêté par un signal d'influence externe.

13. Dispositif de surveillance (1) selon l'une des revendications 1 à 12, **caractérisé en ce que** l'inhibition partielle est assurée.

14. Dispositif de surveillance (1) selon l'une des revendications 1 à 13, **caractérisé par le fait que** le capteur de sécurité (6) est un rideau lumineux ou un capteur de distance.

15. Dispositif de surveillance (1) selon la revendication 14, **caractérisé en ce que** le rideau lumineux comporte une série d'émetteurs (9) émettant des faisceaux lumineux (8) et une série de récepteurs correspondants (10), les faisceaux lumineux (8) formant les axes du rideau lumineux.

16. Dispositif de surveillance (1) selon la revendication 15, **caractérisé en ce que** seule une partie des axes de faisceau d'un rideau lumineux est couverte dans le cas d'une inhi-bition partielle.

17. Dispositif de surveillance (1) selon l'une des revendications 14 ou 16, **caractérisé en ce que** des axes de faisceau prédéterminés doivent rester libres pendant l'inhibition du rideau lumineux.

18. Dispositif de surveillance (1) selon l'une des revendications 14 à 17, **caractérisé en ce que** les axes prédéterminés du faisceau peuvent être indéfinis pendant l'inhibition du rideau lumineux.

19. Dispositif de surveillance (1) selon la revendication 17, **caractérisé en ce que** les axes de faisceaux indéterminés forment des régions de transition entre les axes de faisceaux assourdis et les axes de faisceaux qui doivent rester libres.

20. Procédé de commande d'un dispositif de surveillance (1) comportant un capteur de sécurité (6) conçu pour surveiller un champ de protection de manière à générer un signal de commutation en fonction des détections d'objets dans le champ de protection, un signal de violation du champ de protection étant généré comme signal de commutation en cas d'intervention d'un objet, **caractérisé par le fait qu'**une unité externe est prévue à l'extérieur du capteur de sécurité (6), qui génère un signal de commande avec un état de signal inactif et actif, en ce qu'une unité de retardement (19) est prévue pour retarder le signal de commutation d'une durée prédéterminée, et en ce que des moyens de surveillance sont prévus pour contrôler, en tant que condition d'inhibition, si le début et/ou la fin du signal de violation du champ de protection et du signal de commande actif se situent dans une fenêtre temporelle prédéterminée (Z1).
